# EUROPEAN PATENT APPLICATION

(11) **EP 4 841 072 A1**
(43) Date of publication of application: **18.11.2026**
(21) Application number: 26178668.5
(22) Date of filing: 13.05.2026
(51) Int. Cl.: F01D 21/00, G01N 21/01, G01N 21/84, G06T 7/00, G06V 10/82

(54) **MACHINE VISION THERMAL DISTRESS MAPPING AND AGGREGATION FOR GAS TURBINE ENGINE COMPONENT**

(30) Priority: 13.05.2025 US 202519206798
(71) Applicant: RTX Corporation, Farmington, CT 06032 (US)
(72) Inventor: WHELAN, John Logan, Farmington, 06032 (US); RUOTI, Christopher A., Farmington, 06032 (US); KOPP, Joel Bennett, Farmington, 06032 (US)
(74) Representative: Dehns

(57) **Abstract**

A method of creating a database of distress to a gas turbine engine component includes the steps of 1) capturing an image of the component utilizing a camera, 2) processing the captured image to identify individual pixels, and associate the pixels with distress to a thermal barrier coating on the component to establish a distress map, 3) receiving flight information regarding operational conditions relative to the stress of the associated engine that received the component, 4) associating the flight information with the distress map to create a database and 5) predicting damage to other components based upon their unique flight information and the database. A system for predicting distress to a gas turbine engine component is also disclosed.

## Description

### BACKGROUND

This invention relates to a way of gathering damage information to a gas turbine engine component after a period of use to form a database that allows one to predict damage in other gas turbine engine components.

Gas turbine engines are known, and typically include a propulsor delivering air into a compressor, and as propulsion air. The air is compressed in the compressor and delivered into a combustor where it is mixed with fuel and ignited. Products of this combustion pass downstream over turbine rotors driving them to rotate. The turbine rotors in turn drive rotors and the propulsor and compressor.

As known, the combustor, and upstream portions of the turbine sections see very high temperatures. Coatings are often provided on these components to protect them against the high temperatures.

With use there can be damage to the coatings. Currently collection of data with regard to damage requires a multi-step labor intensive process involving full engine teardown and manual annotation of observed distress. This intensive process limits the volume of data that can be collected and therefore limits the potential accuracy of lifing model calibration.

### SUMMARY

According to a first aspect of the invention, a method, for example of creating and/or using a database of distress to a gas turbine engine component, or of predicting distress to a gas turbine engine component, includes the steps of 1) capturing an image of the component utilizing a camera, 2) processing the captured image to identify individual pixels, and associate the pixels with distress to a thermal barrier coating on the component to establish a distress map, 3) receiving flight information regarding operational conditions relative to the stress of the associated engine that received the component, 4) associating the flight information with the distress map to create a database and 5) predicting damage to other components based upon their unique flight information and the database.

In an embodiment of the above, the component is in a combustor in the gas turbine engine.

In an embodiment of any of the above, the component is a combustor liner.

In an embodiment of any of the above, the camera is a hand held camera.

In an embodiment of any of the above, in the processing step an artificial intelligent model recognizes the component and isolates the component part in the image relying upon design information of the component.

In an embodiment of any of the above, the processing step 2) further including a model trained on a broad data set of parts with thermal coating distress and generating a distress map by assigning each pixel in the captured image to a particular destress type.

In an embodiment of any of the above, the processing step further includes determine a distress map for step 5).

In an embodiment of any of the above, the predicted distress map is then projected onto a two dimensional representation of an as built geometry of the component in question before use.

In an embodiment of any of the above, a map of regions of interest on the two dimensional representation is used to discretize the distress information into a table of percentage coverage within a given region of each type of distress.

In an embodiment of any of the above, the model includes a deep convolutional neural network architecture.

According to another aspect of the invention, a system for predicting distress to a gas turbine engine component includes processing circuitry and a memory. The processing circuitry and memory are operable to receive an image of a component from a camera, process the image to identify individual pixels, and associate the pixels with distress to a thermal barrier coating on the component to establish a distress map, receive flight information regarding operational conditions relative to the stress of the associated engine that received the component, associate the flight information with the damage map and predict damage to other components based upon their unique flight information and the distress map.

In an embodiment of the above, the component is in a combustor in the gas turbine engine.

In an embodiment of any of the above, the component is a combustor liner.

In an embodiment of any of the above, the camera is a hand held camera.

In an embodiment of any of the above, an artificial intelligent model is operable to recognize the component and isolate the component part in the image relying upon design information of the component.

In an embodiment of any of the above, the model is trained on a broad data set of parts with thermal coating distress to generate a distress map by assigning each pixel in the image to a particular destress type.

In an embodiment of any of the above, the processing circuitry and memory operable to determine a distress map.

In an embodiment of any of the above, the distress map is projected onto a two dimensional representation of an as built geometry of the component in question before use.

In an embodiment of any of the above, a map of regions of interest on the two dimensional representation is used to discretize the distress information into a table of percentage coverage within a given region of each type of distress.

In an embodiment of any of the above, a deep convolutional neural network architecture is used as the model.

The invention may include any one or more of the individual features disclosed above and/or below alone or in any combination thereof.

These and other features of the present invention can be best understood from the following specification and drawings, the following of which is a brief description.

### BRIEF DESCRIPTION OF THE DRAWINGS

Figure 1 schematically shows a gas turbine engine.
Figure 2 shows stress with regard to a coating on a gas turbine engine component.
Figure 3 displays various types of flight that an engine may see in an associated aircraft.
Figure 4A shows a gas turbine engine combustor section.
Figure 4B is a photo of a liner from the Figure 4A section having visible thermal bearing coating damage.
Figure 4C is an inferred two dimensional map of the distress from the Figure 4B photograph.
Figure 4D then provides a distress map of the gas turbine engine component.
Figure 4E shows a distress discretization, with the panel being divided into reasons of interest.
Figure 4F shows a data set that can be gathered utilizing this method.
Figure 5A shows detection of edges.
Figure 5B shows detection of edges.
Figure 5C shows a threshold map.
Figure 5D shows a contour mask.
Figure 5E shows a RANSAC line model.
Figure 5F shows the generation of a distributed heat point.
Figure 5G displays an image of distributed key points.
Figure 5H is a map of part key points.
Figure 5I is a piecewise affine transform.
Figure 6 is a flowchart.

### DETAILED DESCRIPTION

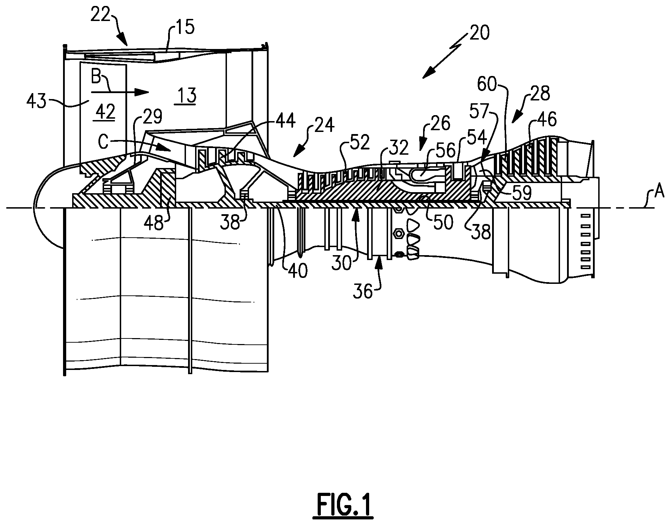

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 may include a single-stage fan 42 having a plurality of fan blades 43. The fan blades 43 may have a fixed stagger angle or may have a variable pitch to direct incoming airflow from an engine inlet. The fan 42 drives air along a bypass flow path B in a bypass duct 13 defined within a housing 15 such as a fan case or nacelle, and also drives air along a core flow path C for compression and communication into the combustor section 26 then expansion through the turbine section 28. A splitter 29 aft of the fan 42 divides the air between the bypass flow path B and the core flow path C. The housing 15 may surround the fan 42 to establish an outer diameter of the bypass duct 13. The splitter 29 may establish an inner diameter of the bypass duct 13. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures. The engine 20 may incorporate a variable area nozzle for varying an exit area of the bypass flow path B and/or a thrust reverser for generating reverse thrust.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in the exemplary gas turbine engine 20 is illustrated as a geared architecture 48 to drive the fan 42 at a lower speed than the low speed spool 30. The inner shaft 40 may interconnect the low pressure compressor 44 and low pressure turbine 46 such that the low pressure compressor 44 and low pressure turbine 46 are rotatable at a common speed and in a common direction. In other embodiments, the low pressure turbine 46 drives both the fan 42 and low pressure compressor 44 through the geared architecture 48 such that the fan 42 and low pressure compressor 44 are rotatable at a common speed. Although this application discloses geared architecture 48, its teaching may benefit direct drive engines having no geared architecture. The high speed spool 32 includes an outer shaft 50 that interconnects a second (or high) pressure compressor 52 and a second (or high) pressure turbine 54. A combustor 56 is arranged in the exemplary gas turbine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

Airflow in the core flow path C is compressed by the low pressure compressor 44 then the high pressure compressor 52, mixed and burned with fuel in the combustor 56, then expanded through the high pressure turbine 54 and low pressure turbine 46. The mid-turbine frame 57 includes airfoils 59 which are in the core flow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The fan 42 may have at least 10 fan blades 43 but no more than 20 or 24 fan blades 43. In examples, the fan 42 may have between 12 and 18 fan blades 43, such as 14 fan blades 43. An exemplary fan size measurement is a maximum radius between the tips of the fan blades 43 and the engine central longitudinal axis A. The maximum radius of the fan blades 43 can be at least 40 inches (101.6 cm), or more narrowly no more than 75 inches (190.5 cm). For example, the maximum radius of the fan blades 43 can be between 45 inches (114.3 cm) and 60 inches (152.4 cm), such as between 50 inches (127 cm) and 55 inches (139.7 cm). Another exemplary fan size measurement is a hub radius, which is defined as distance between a hub of the fan 42 at a location of the leading edges of the fan blades 43 and the engine central longitudinal axis A. The fan blades 43 may establish a fan hub-to-tip ratio, which is defined as a ratio of the hub radius divided by the maximum radius of the fan 42. The fan hub-to-tip ratio can be less than or equal to 0.35, or more narrowly greater than or equal to 0.20, such as between 0.25 and 0.30. The combination of fan blade counts and fan hub-to-tip ratios disclosed herein can provide the engine 20 with a relatively compact fan arrangement.

The low pressure compressor 44, high pressure compressor 52, high pressure turbine 54 and low pressure turbine 46 each include one or more stages having a row of rotatable airfoils. Each stage may include a row of vanes adjacent the rotatable airfoils. The rotatable airfoils are schematically indicated at 47, and the vanes are schematically indicated at 49.

The low pressure compressor 44 and low pressure turbine 46 can include an equal number of stages. For example, the engine 20 can include a three-stage low pressure compressor 44, an eight-stage high pressure compressor 52, a two-stage high pressure turbine 54, and a three-stage low pressure turbine 46 to provide a total of sixteen stages. In other examples, the low pressure compressor 44 includes a different (e.g., greater) number of stages than the low pressure turbine 46. For example, the engine 20 can include a five-stage low pressure compressor 44, a nine-stage high pressure compressor 52, a two-stage high pressure turbine 54, and a four-stage low pressure turbine 46 to provide a total of twenty stages. In other embodiments, the engine 20 includes a four-stage low pressure compressor 44, a nine-stage high pressure compressor 52, a two-stage high pressure turbine 54, and a three-stage low pressure turbine 46 to provide a total of eighteen stages. It should be understood that the engine 20 can incorporate other compressor and turbine stage counts, including any combination of stages disclosed herein.

The engine 20 may be a high-bypass geared aircraft engine. It should be understood that the teachings disclosed herein may be utilized with various engine architectures, such as low-bypass turbofan engines, prop fan and/or open rotor engines, turboprops, turbojets, etc. The bypass ratio can be greater than or equal to 10.0 and less than or equal to about 18.0, or more narrowly can be less than or equal to 16.0. The geared architecture 48 may be an epicyclic gear train, such as a planetary gear system or a star gear system. The epicyclic gear train may include a sun gear, a ring gear, a plurality of intermediate gears meshing with the sun gear and ring gear, and a carrier that supports the intermediate gears. The sun gear may provide an input to the gear train. The ring gear (e.g., star gear system) or carrier (e.g., planetary gear system) may provide an output of the gear train to drive the fan 42. A gear reduction ratio may be greater than or equal to 2.3, or more narrowly greater than or equal to 3.0, and in some embodiments the gear reduction ratio is greater than or equal to 3.4. The gear reduction ratio may be less than or equal to 4.0. The fan diameter is significantly larger than that of the low pressure compressor 44. The low pressure turbine 46 can have a pressure ratio that is greater than or equal to 8.0 and in some embodiments is greater than or equal to 10.0. The low pressure turbine pressure ratio can be less than or equal to 13.0, or more narrowly less than or equal to 12.0. Low pressure turbine 46 pressure ratio is pressure measured prior to an inlet of low pressure turbine 46 as related to the pressure at the outlet of the low pressure turbine 46 prior to an exhaust nozzle. It should be understood, however, that the above parameters are only exemplary of one embodiment of a geared architecture engine and that the present invention is applicable to other gas turbine engines including direct drive turbofans. All of these parameters are measured at the cruise condition described below.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. The engine parameters described above, and those in the next paragraph are measured at this condition unless otherwise specified.

"Fan pressure ratio" is the pressure ratio across the fan blade 43 alone, without a Fan Exit Guide Vane ("FEGV") system. A distance is established in a radial direction between the inner and outer diameters of the bypass duct 13 at an axial position corresponding to a leading edge of the splitter 29 relative to the engine central longitudinal axis A. The fan pressure ratio is a spanwise average of the pressure ratios measured across the fan blade 43 alone over radial positions corresponding to the distance. The fan pressure ratio can be less than or equal to 1.45, or more narrowly greater than or equal to 1.25, such as between 1.30 and 1.40. "Corrected fan tip speed" is the actual fan tip speed in ft/sec divided by an industry standard temperature correction of [(Tram °R) / (518.7 °R)]^{0.5}. The corrected fan tip speed can be less than or equal to 1150.0 ft / second (350.5 meters/second), and can be greater than or equal to 1000.0 ft / second (304.8 meters/second).

The fan 42, low pressure compressor 44 and high pressure compressor 52 can provide different amounts of compression of the incoming airflow that is delivered downstream to the turbine section 28 and cooperate to establish an overall pressure ratio (OPR). The OPR is a product of the fan pressure ratio across a root (i.e., 0% span) of the fan blade 43 alone, a pressure ratio across the low pressure compressor 44 and a pressure ratio across the high pressure compressor 52. The pressure ratio of the low pressure compressor 44 is measured as the pressure at the exit of the low pressure compressor 44 divided by the pressure at the inlet of the low pressure compressor 44. In examples, a sum of the pressure ratio of the low pressure compressor 44 and the fan pressure ratio is between 3.0 and 6.0, or more narrowly is between 4.0 and 5.5. The pressure ratio of the high pressure compressor ratio 52 is measured as the pressure at the exit of the high pressure compressor 52 divided by the pressure at the inlet of the high pressure compressor 52. In examples, the pressure ratio of the high pressure compressor 52 is between 9.0 and 12.0, or more narrowly is between 10.0 and 11.5. The OPR can be equal to or greater than 45.0, and can be less than or equal to 70.0, such as between 50.0 and 60.0. The overall and compressor pressure ratios disclosed herein are measured at the cruise condition described above, and can be utilized in two-spool architectures such as the engine 20 as well as three-spool engine architectures.

The engine 20 establishes a turbine entry temperature (TET). The TET is defined as a maximum temperature of combustion products communicated to an inlet of the turbine section 28 at a maximum takeoff (MTO) condition. The inlet is established at the leading edges of the axially forwardmost row of airfoils of the turbine section 28, and MTO is measured at maximum thrust of the engine 20 at static sea-level and 86 degrees Fahrenheit (°F) (30 °C). The TET may be greater than or equal to 2700.0 °F (1482.2 °C) , or more narrowly less than or equal to 3500.0 °F (1926.7 °C), such as between 2750.0 °F (1510.0 °C) and 3350.0 °F (1843.3 °C). The relatively high TET can be utilized in combination with the other techniques disclosed herein to provide a compact turbine arrangement.

The engine 20 establishes an exhaust gas temperature (EGT). The EGT is defined as a maximum temperature of combustion products in the core flow path C communicated to at the trailing edges of the axially aftmost row of airfoils of the turbine section 28 at the MTO condition. The EGT may be less than or equal to 1000.0 °F (537.78 °C), or more narrowly greater than or equal to 800.0 °F (426.7 °C), such as between 900.0 °F (482.2 °C) and 975.0 °F (523.9 °C). The relatively low EGT can be utilized in combination with the other techniques disclosed herein to reduce fuel consumption.

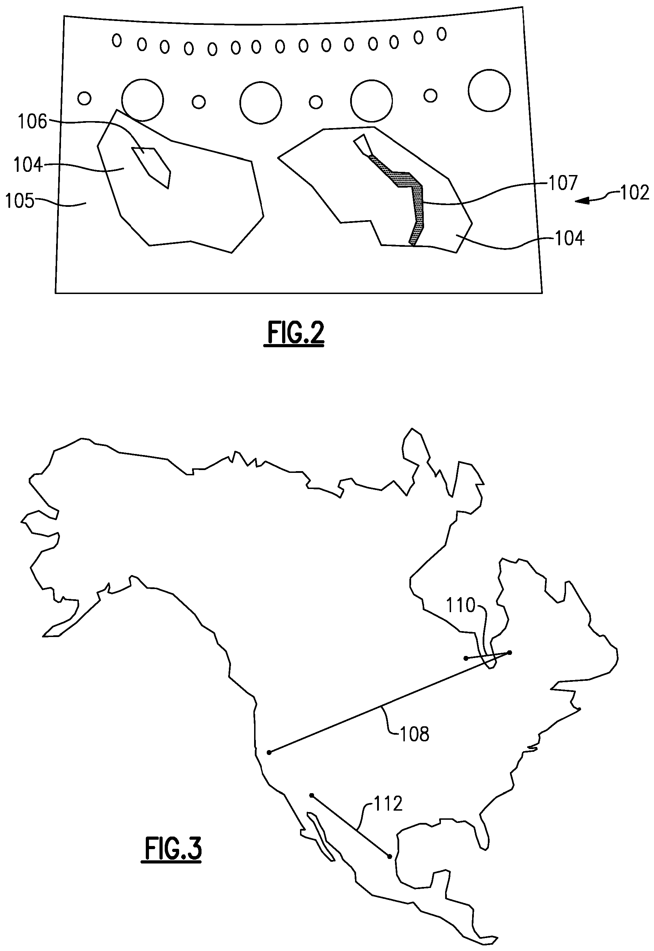

Figure 2 shows a component 100 which is a combustor liner 102 that may be found in the engine of Figure 1 after some period of use. There is spallation distress at 104 to a thermal barrier coating 105. There is further an area of "burn through" distress shown at 106 and a crack at 107. It would be desirable to create a database using less complex methods than that described in the Background section to generate information and predict the likely state of a thermal barrier coating on a liner in an engine after some period of use.

Figure 3 shows a challenge with generating an accurate data set. Three flights are shown schematically. Flight 108 is a relatively long flight through areas which will be at a relatively moderate temperature.

Flight 110 shows a flight that is relatively short, although again in areas with relatively moderate temperatures.

Flight 112 shows a flight through an area that will tend to be at a higher temperature, and also through areas which may include desert.

The damage and wear that the gas turbine engine per flight hour will be less for the flight 108 than for the flight 110. This is because flight 110 spends a higher percentage of its life at high power operation including take off. On the other hand, flight 108 spends a very high percentage of its life at relatively low power cruise conditions.

Flight 112 may be the most stressful as the engine experiences sand and high temperatures.

This disclosure captures actual damage to a coating in real world components using an efficient method, and associates that captured damage with the operational life conditions of the associated engine.

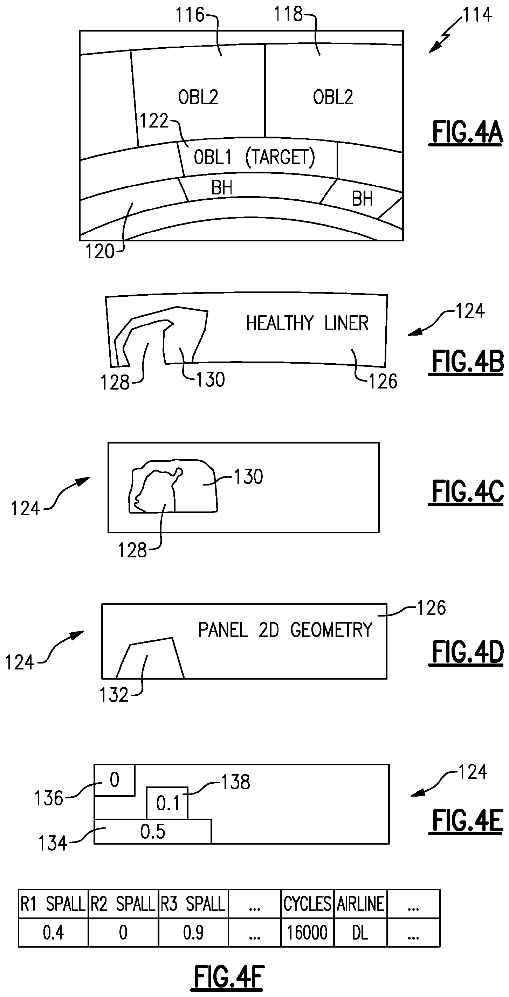

Now, as shown in Figure 4A, a section 114 of a gas turbine engine combustor outer shell is shown having a plurality of parts 116, 118, 120 and 122. Parts 116, 118 and 122 are combustor outer liners. Part 120 is a bulkhead. The liners receive thermal barrier coatings to protect them against high temperature. That thermal barrier coating is subject to challenges during operation of the gas turbine engine, and may eventually look not unlike the liner in Figure 2.

At Figure 4B a photograph is taken of a liner 126 having spallation 130, and complete burn through at 128. No complex image capture equipment is required. Rather, any handheld camera may capture this image. During the image capture, the image of the part should be approximately at a surface normal to the camera.

Then, an artificial intelligence semantic-segmentation model is trained on the specific assembly to recognize component parts. A data set of human annotated production and aftermarket combustor hardware information is used. This model processes each photograph and removes everything but the component part in focus.

In Figure 4C, the model is then trained on a broad data set of parts with thermal coating distress, and it then generates a "distress map" of different distress modes by assigning each pixel in the image to a background or a particular distress mode. Here burn through damage is shown at 128, wherein less spallation damage is shown at 130.

In Figure 4D, a predicted distress map 132 is then projected utilizing an automated image homography method onto a two dimensional representation of the "as built" geometry of the part. The damage is shown at 132.

Then, in Figure 4E there is a discretization of distress showing areas of interest having no damage 136, light damage 138, or heavy damage as shown at 134.

Finally, as shown in Figure 4F, the 2D stress map and discretized data are accumulated into a large data set including metadata identifying each part and its associated engine. The metadata includes flight information about the life the engine has experienced since first receiving the component of interest.

This data is used for analysis of thermal coating distress across an engine fleet and used to calibrate engineering simulations to predict part life for current and future designs.

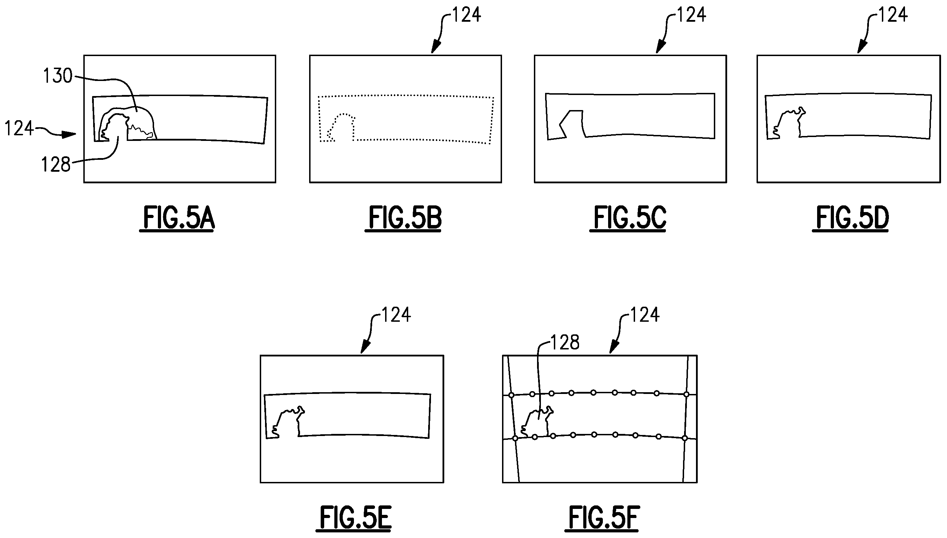

Figures 5A-5I occur as steps moving from Figure 4C to Figure 4D.

As shown in Figure 5A, a grayscale raw image 124 of a liner 126 includes the damage 128 and 130.

There is then Sobel edge detection at Figure 5B. The Sobel edge detection is essentially a 2-D spatial gradient measurement of an image that emphasizes regions of high spatial frequency that would correspond to edges. It may be used to find an approximate absolute gradient magnitude at each point in an input gray scale image.

There is Li threshold as shown in Figure 5C. A Li threshold improves a contrast or threshold between foreground and background portions of the image.

There is then an external contour mask created as shown in Figure 5D.

There is then a RANSAC line model created as shown in Figure 5E. Random sample consensus (RANSAC) is an iterative method to estimate parameters of a mathematical model from a set of observed data that contains outliers, when outliers are to be accorded no influence on the values of the estimates. Therefore, it also can be interpreted as an outlier detection method. In this method RANSAC is used to approximate the nominal as-manufactured edge of the part (assumed to be roughly a straight line for each panel) when portions of the panel along the edges have been completely eroded. So sampled points along the bottom edge of the panel of interest that lie in burned-through regions are treated as outliers.

Then, there is a distributed key points of the area 128 as shown in Figure 5F. This step constructs an affine transform that evenly distributes points along an edge of the part to create a matrix over a design intent

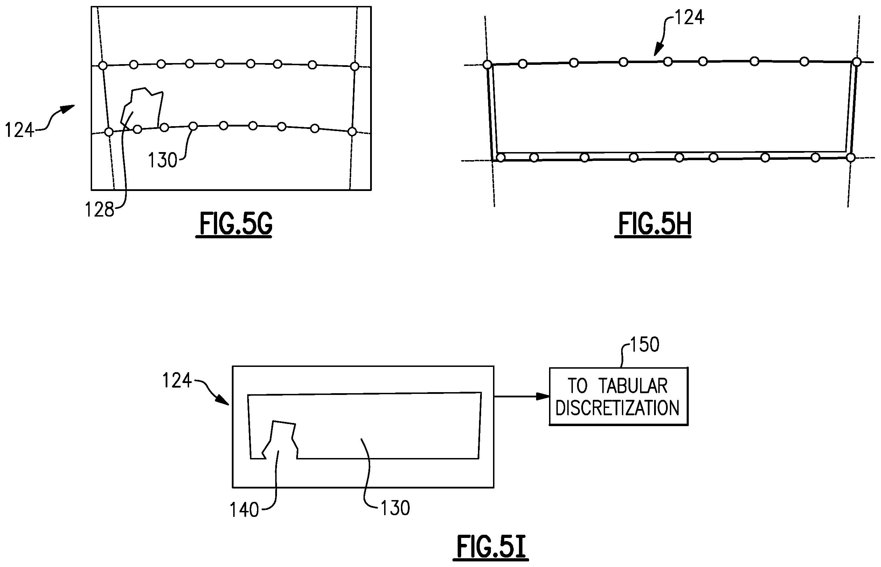

At Figure 5G there are distributed images key points developed.

At Figure 5H there is a distributed part key points created. This step places the damage to an actual part over a design intent.

At Figure 5I there is a piecewise affine transform created.

Discretization of distress to produce the table shown in Figure 4F happens immediately after the piecewise affine transform in Figure 5I as a "per panel" operation. Stacking or aggregation of distress across multiple panels, either for the 2D distress map or discretized distress table, then happens as a final step. Further the distress aggregation can be done along any "query" of a particular panel type, such as every outer liner in a specific engine, or every outer liner across a sample of a plurality of engines to show circumferential variation of distress across plural combustors.

Finally, in Figure 5J there is a transformation in stacked distress map created which is then sent to a computer as shown at 150 that receives the discretization tabular data set and can be utilized to predict life on existing or future parts based upon their operational history.

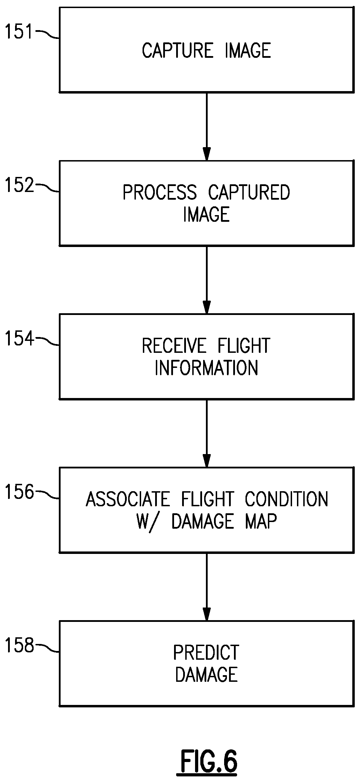

As shown in Figure 6, a flow chart could be said to include capturing an image of a component at step 151. The captured image is then processed at step 152 as described above to form a distress map.

At step 154 the method receives flight information for the component based upon the flights (e.g. 108/110/112) that the engine might have seen.

At step 156 the flight conditions seen by an engine are associated with the distress map.

Finally at step 158 the database created at step 156 can be utilized to predict damage to other components based upon their unique flight history.

While this method describes the use to predict damage on a combustor panel, the disclosure would benefit other parts of a gas turbine engine.

A controller may include one or more computer processors, memory, storage means, network devices, input and/or output devices, and/or interfaces. The computing devices may be operable to execute one or more software programs and operable to perform the methods disclosed herein. The computing devices may be operable to communicate with one or more networks established by one or more computing devices. The memory may include UVPROM, EEPROM, FLASH, RAM, ROM, DVD, CD, a hard drive, or other computer readable medium which may store data and/or the functionality of this description. The computing device(s) may be collectively operable to execute any of the functionality disclosed herein. The computing devices may be a desktop computer, laptop computer, smart phone, tablet, or any other computer device. Input devices may include a keyboard, mouse, touchscreen, etc. The output devices may include a monitor, speakers, printers, etc. Each of the computing devices may include one or more processors coupled to memory. The computing devices may be coupled to each other by one or more connections. The connection may be a wired and/or wireless connection. The connections may be established over one or more networks and/or other computing systems.

Appropriate machine learning models are also relied upon.

As an example, the digital disassembly and distress prediction of the photographs may rely upon a deep convolutional neural network. One implementation might be the model architecture commonly referred to as a "UNet", which is a convolutional neural network designed with an encoder-decoder architecture. The "encoder" captures latent context through downsampling and then the "decoder" facilitates pixel-wise classification at the original image resolution. However, other appropriate machine learning models could be utilized.

A method of creating a database of distress to a gas turbine engine component under this disclosure could be said to include the steps of 1) capturing an image of the component utilizing a camera, 2) processing the captured image to identify individual pixels, and associate the pixels with distress to a thermal barrier coating on the component to establish a distress map, 3) receiving flight information regarding operational conditions relative to the stress of the associated engine that received the component, 4) associating the flight information with the distress map to create a database and 5) predicting damage to other components based upon their unique flight information and the database.

A system for predicting distress to a gas turbine engine component under this disclosure could be said to include processing circuitry and a memory. The processing circuitry and memory operable to receive an image of a component from a camera, process the image to identify individual pixels, and associate the pixels with distress to a thermal barrier coating on the component to establish a distress map, receive flight information regarding operational conditions relative to the stress of the associated engine that received the component, associate the flight information with the damage map and predicting damage to other components based upon their unique flight information and the distress map.

Although embodiments of this disclosure have been shown, a worker of ordinary skill in this art would recognize that modifications would come within the scope of this disclosure. As one example, while the propulsor is disclosed as a fan it could also be an open rotor. For that reason, the following claims should be studied to determine the true scope and content of this disclosure.

## Claims

1. A method comprising the steps of:
1) capturing an image of the component utilizing a camera;
2) processing the captured image to identify individual pixels, and associate the pixels with distress to a thermal barrier coating on the component to establish a distress map;
3) receiving flight information regarding operational conditions relative to the stress of the associated engine that received the component;
4) associating the flight information with the distress map to create a database; and
5) predicting damage to other components based upon their unique flight information and the database.

2. The method of claim 1, wherein the processing step further includes determining a distress map for step 5).

3. The method of claim 1 or 2, wherein in the processing step an artificial intelligence model recognizes the component and isolates the component part in the image relying upon design information of the component.

4. The method of any preceding claim, wherein the processing step 2) further includes a or the model trained on a broad data set of parts with thermal coating distress and generating a or the distress map by assigning each pixel in the captured image to a particular destress type.

5. The method of claim 4, wherein the predicted distress map is then projected onto a two dimensional representation of an as built geometry of the component in question before use.

6. The method of claim 5, wherein a map of regions of interest on the two dimensional representation is used to discretize the distress information into a table of percentage coverage within a given region of each type of distress.

7. The method of any of claims 3 to 6, wherein the model includes a deep convolutional neural network architecture.

8. A system for predicting distress to a gas turbine engine component (100), the system comprising processing circuitry and a memory, the processing circuitry and memory operable to:
receive an image of a component from a camera;
process the image to identify individual pixels, and associate the pixels with distress to a thermal barrier coating (105) on the component to establish a distress map;
receive flight information regarding operational conditions relative to the stress of the associated engine that received the component;
associate the flight information with the damage map; and
predict damage to other components based upon their unique flight information and the distress map.

9. The method or system of any preceding claim, wherein the component is in a combustor (56) in the gas turbine engine.

10. The method or system of claim 9, wherein the component is a combustor liner (102).

11. The method or system of any preceding claim, wherein the camera is a hand held camera.

12. The system of any of claims 8 to **11,** wherein the processing circuitry and memory are operable to determine a or the distress map.

13. The system of any of claims 8 to 12, wherein an artificial intelligence model is operable to recognize the component and isolate the component part in the image relying upon design information of the component, optionally wherein a deep convolutional neural network architecture is used as the model.

14. The system of any of claims 8 to 13, wherein a or the model is trained on a broad data set of parts with thermal coating distress to generate a or the distress map by assigning each pixel in the image to a particular destress type, optionally wherein a deep convolutional neural network architecture is used as the model.

15. The system of claim 14, wherein the distress map is projected onto a two dimensional representation of an as built geometry of the component in question before use, and optionally wherein a map of regions of interest on the two dimensional representation is used to discretize the distress information into a table of percentage coverage within a given region of each type of distress.
